# EUROPÄISCHE PATENTSCHRIFT

(11) **EP 1 298 580 B1**
(45) Veröffentlichungstag und Bekanntmachung des Hinweises auf die Patenterteilung: **15.11.2006**
(21) Anmeldenummer: 02020972.2
(22) Anmeldetag: 19.09.2002
(51) Int. Cl.: G06K 19/077

(54) **Hitzebeständiges Gehäuse für elektrische Funktionselemente und Verwendung einer solchen Vorrichtung für einen mobilen Datenspeicher**
Heat resistant housing for electric components and its use for a mobile data memory
Boîtier électrique résistant à la chaleur et son utilisation pour une mémoire de données mobile

(30) Priorität: 01.10.2001 DE 20116141 U
(43) Veröffentlichungstag der Anmeldung: 02.04.2003
(73) Patentinhaber: SIEMENS AKTIENGESELLSCHAFT, 80333 München (DE)
(72) Erfinder: Faltin, Leopold, Dr., 1160 Wien (AT); Ladanyi, Christa, 1070 Wien (AT)

(56) Entgegenhaltungen:
- EP-A- 0 720 122
- WO-A-98/45806
- DE-A- 4 023 119
- DE-A- 4 205 216
- DE-U- 9 205 049
- JP-A- 4 159 339

## Beschreibung

Aus der EP 0 720 122 A2 ist ein Datenspeicher bekannt, welcher einen Isolierkörper mit einer möglichst zentrisch im Inneren befindlichen Aufnahmekammer aufweist. In die Aufnahmekammer ist ein Aufnahmeblock einlegbar. Dieser ist aus einem Material gefertigt, welches im Vergleich zum umgebenden Isolierkörper eine große Wärmekapazität und Wärmeleitfähigkeit besitzt. Der Aufnahmeblock weist möglichst zentrisch im Inneren ein Aufnahmefach für elektrische Funktionselemente auf, welches mit einem Abdeckblock verschließbar ist. Diese Anordnung hat den Vorteil, dass sich trotz einer möglichen Verkleinerung in der Bauform eine geringere stationäre Temperatur im Aufnahmefach einstellt, wenn der Datenspeicher zyklisch Erhitzungs- und Abkühlungsphasen ausgesetzt ist. Vorteilhaft ist der Aufnahmeblock aus Eisen, aus einem keramischen Material, insbesondere aus einem keramischen Stein oder aus Olivinstein, oder aus oxydischem Material gefertigt, insbesondere aus einem Aluminium-Zyakon-Oxyd.

Aus der JP 4159339 A ist eine Rezeptur eines verschäumbaren querverbundenen Polyolefin-Granulats offenbart. Der Schaum weist eine feine und homogene geschlossenporige Struktur mit verbesserten thermischen Isoliereigenschaften auf. Die Rezeptur zeigt in einer thermischen Analyse mittels eines Differential Scanning Calorimeters zwei hitzeabsorbierende Temperaturspitzen.

Aus der DE 92 05 049.2 ist eine hermetisch abgeschlossene, temperaturbeständige Datenspeichervorrichtung bekannt. Das Innere des Gehäuses dieser Vorrichtung ist bis auf einen Hohlraum nahezu vollständig mit Wärmedämmstoff gefüllt. In diesen sind die elektrischen Funktionselemente der Vorrichtung, insbesondere Datenspeicher- und Energieversorgungselemente, eingelegt.

Bei einer Anordnung dieser Art tritt zum einen das Problem auf, dass die bis auf den Hohlraum nahezu vollständige Anfüllung des Gehäuseinneren mit dem Wärmedämmstoff ein relativ großes Bauvolumen des gesamten Gehäuses verursacht. Hierdurch wird die Handhabbarkeit der Vorrichtung eingeschränkt.

Das wesentliche Problem dieser bekannten Vorrichtung besteht aber darin, dass der Wärmedämmstoff bei starker äußerer Erwärmung des Gehäuses zwar das Eindringen von Wärme in den die elektrischen Funktionselemente enthaltenden Hohlraum verzögert. Nur mit der gleichen Verzögerung kann aber in einer nachfolgenden Abkühlungsphase der Vorrichtung die Wärme wieder aus dem Hohlraum entweichen. Wird eine derartige Vorrichtung einem zyklischen Wechselspiel von Erhitzungs- und Abkühlphasen ausgesetzt, wie dies z.B. beim Einsatz derartiger Datenträger bei Lackiereinrichtungen für Karosserien in der Automobilindustrie der Fall ist, so stellt sich eine relativ hohe stationäre Temperatur im Inneren des Hohlraumes ein. Hierdurch kann die Lebensdauer dort befindlicher Datenspeicher- und Energieversorgungselemente eingeschränkt werden.

Der Erfindung liegt die Aufgabe zugrunde, einen mobilen Datenspeicher mit einem hitzebeständigen Gehäuse anzugeben, welches einem Zyklus von aufeinanderfolgenden Erhitzungen und Abkühlungen ausgesetzt wird und bei welchem sich trotz der reduzierten äußeren Abmessungen, des verringerten Bauvolumens und Gewichts eine geringere stationäre Temperatur für die im Inneren liegenden elektrischen Funktionselemente einstellt.

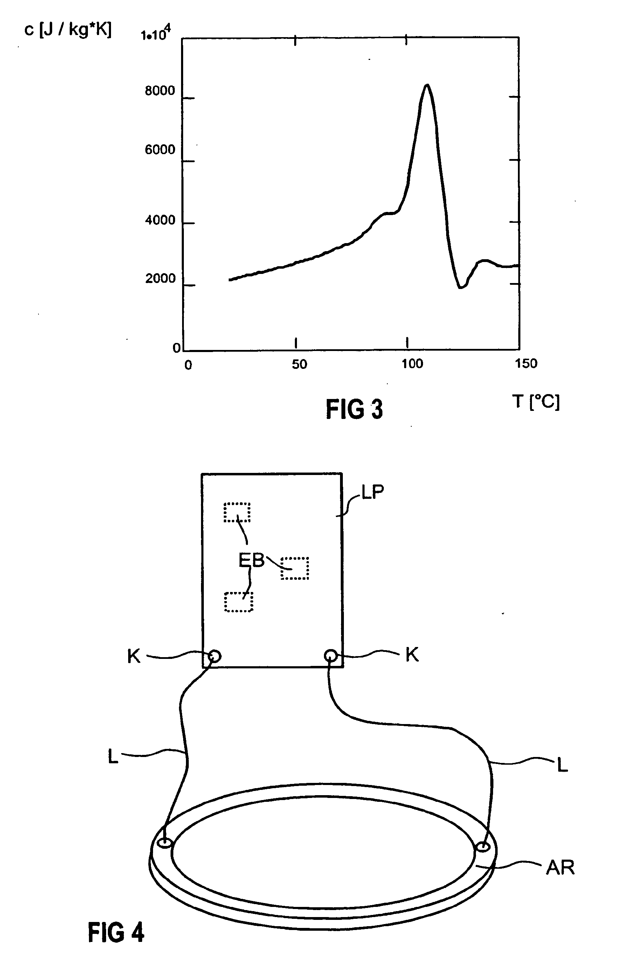

Die Aufgabe wird gelöst mit dem Anspruch 1 angegebenen mobilen Datenspeicher mit einem hitzebeständigen Gehäuse. Dieses verfügt über einen Isolierkörper, der möglichst zentrisch im Inneren eine Aufnahmekammer aufweist. Mit einem Abdeckblock ist die Aufnahmekammer verschließbar. Das hitzebeständige Gehäuse weist weiterhin einen Aufnahmeblock auf, welcher in die Aufnahmekammer einbringbar ist und die elektrische Funktionselemente mit einem Material mit einer temperaturabhängigen spezifischen Wärmekapazität umgibt. Das Material kann weiterhin in einem Temperaturbereich signifikant erhöhte Werte der spezifischen Wärmekapazität aufweisen (FIG 3). Dabei kann der Temperaturbereich bis zu mehreren 10°C betragen und ab einer Temperatur von ca. 90°C beginnen. Das Material mit der temperaturabhängigen spezifischen Wärmekapazität kann z.B. ein hochpolymerer thermoelastischer Kunststoff mit geringer Dichte, insbesondere eine Kunststoff der LDPE-Sorte sein.

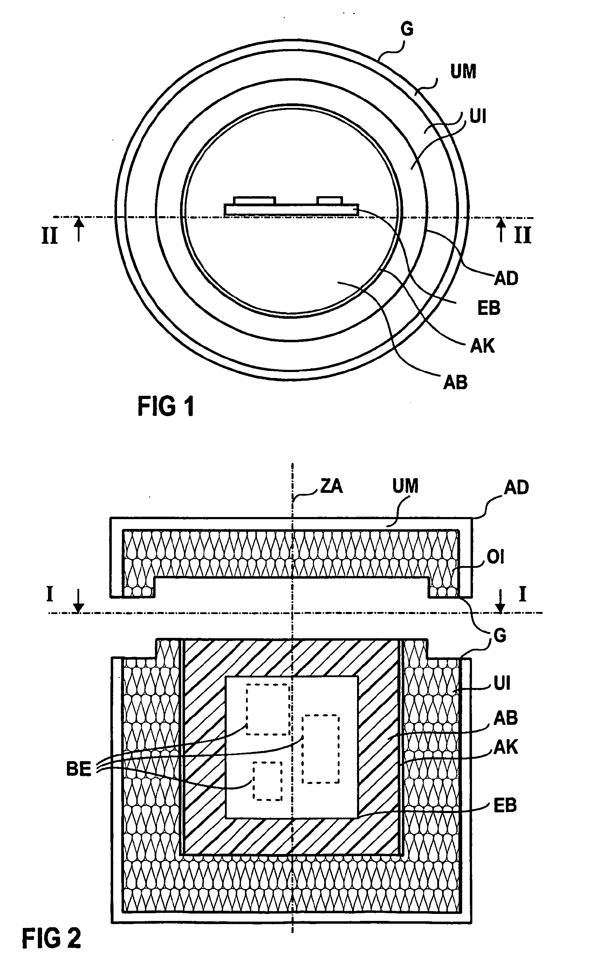

Der Isolierkörper oder der Aufnahmeblock können eine zylindrische Form aufweisen, wobei das Verhältnis von Oberfläche zu Volumen möglichst klein sein kann (FIG 1,2). Der Isolierkörper kann weiterhin von einer Kapsel hermetisch dicht umgeben sein und aus einem schlagfesten und hitzebeständigen Kunststoff bestehen. Schließlich ist es auch möglich, den Abdeckblock zum Verschließen der Aufnahmekammer aus dem gleichen Material wie den Isolierkörper zu fertigen.

Die Erfindung zeichnet sich dadurch aus, dass die im Aufnahmeblock eingebetteten elektrischen Funktionselemente möglichst gleichmäßig in allen Raumrichtungen von einem Material umgeben sind, welches eine hohe spezifische Wärmekapazität und gute Wärmeleitfähigkeit bei einem geringen spezifischen Gewicht aufweist. Erreichbar ist die hohe spezifische Wärmekapazität durch ein Material mit energieintensiven Phasenübergängen wie Schmelzen und Verfestigen bei Erhitzungen und Abkühlungen in einem gewissen Temperaturbereich. Das Material weist somit einen "unscharfen", d.h. einen über einen Temperaturbereich verteilten Schmelzpunkt auf. Umgeben ist der Aufnahmeblock weiterhin von einem Isolierkörper aus einem Material mit geringer Wärmeleitfähigkeit und geringer spezifischer Wärmekapazität.

Die hiermit erreichte Einbettung der elektrischen Funktionselemente hat bei einem zyklischen Wechselspiel von Erhitzungs- und Abkühlphasen den besonderen Vorteil, dass sich im Vergleich zur nur einlagigen, vollständigen Umhüllung mit Wärmedämmstoff eine geringere stationäre Temperatur im Bereich der elektrischen Funktionselemente durch den umgebenden Aufnahmeblock einstellt. Während der Isolierkörper naturgemäß das Eindringen von Wärme an die elektrischen Funktionselemente verzögert, wirkt das eine große Wärmekapazität und eine gute Wärmeleitfähigkeit aufweisende Material des Aufnahmeblockes in diesem Fall wie eine Wärmesenke.

Ein weiterer Vorteil der erfindungsgemäßen Anordnung besteht darin, dass durch die Kombination eines äußeren Isolierkörpers mit einem inneren Aufnahmeblock, und dessen Materialeigenschaften, die äußeren Abmessungen und das Gewicht eines derart Gehäuses für elektrische Funktionselemente i.Vgl. zur bisherigen Lösung erheblich reduziert werden können. Insbesondere kann die Wandstärke des Isolierkörpers stark verringert werden.

Die Erfindung wird an Hand der nachfolgenden Figuren näher erläutert. Dabei zeigt
- FIG 1,2 :: eine beispielhafte Ausführungsform des erfindungsgemäßen hitzebeständigen Gehäuses, in dessen Inneren symmetrisch zur Radialachse ein Aufnahmeblock für elektrische Funktionselemente angeordnet ist und mit einem kreisförmigen Abdeckblock verschließbar ist,
- FIG 3 :: einen typischen Verlauf der spezifischen Wärmekapazität eines thermoplastischen LDPE-Kunststoff als Funktion der Temperatur und als beispielhaftes Material mit hoher spezifischer Wärmekapazität gemäß der Erfindung, und
- FIG 4 :: eine beispielhafte Verwendung des hitzebeständigen Gehäuses als mobiler Datenspeicher, welcher eine mit Bauelementen bestückte Leiterplatte als ein Beispiel für elektrische Funktionselemente und einen daran anschließbaren Antennenring aufweist.

FIG 1,2 zeigt eine beispielhafte Ausführungsform des erfindungsgemäßen hitzebeständigen Gehäuses G, in dessen Inneren symmetrisch zur Radialachse ZA ein Aufnahmeblock AB für elektrische Funktionselemente EB angeordnet ist und mit einem kreisförmigen Abdeckblock AD verschließbar ist.

Dabei zeigt FIG 1 das beispielhafte hitzebeständige Gehäuse G in einer Draufsicht. Dieses weist in einer bevorzugten Ausführungsform gemäß der Erfindung eine zylindrische Form mit einer zentralen, radialen Symmetrieachse ZA auf. Weiterhin ist im Inneren eine Aufnahmekammer AK symmetrisch zur Symmetrieachse ZA angeordnet, in welche ein gleichfalls passender zylindrischer Aufnahmeblock AB für elektrische Funktionselemente EB eingebracht ist. Die zylindrische Aufnahmekammer AK ist ferner von einem zylindrischen Isolierkörper UI,OI mit einer geringe Wärmeleitfähigkeit gemäß der Erfindung umgeben. Ein geeignetes Material für den Isolierkörper UI,OI kann z.B. ein Wärmedämmstoff, Isolierschaum, Glaswolle oder auch ein hitzebeständiges leichtes Vlies mit zusätzlich geringer Wärmekapazität sein. Die Bauelemente BE der thermisch zu schützenden elektrischen Funktionselemente EB können dabei z.B. auf einer Leiterplatte zentrisch innerhalb des Aufnahmeblocks angeordnet sein. Die Funktionselemente EB können dabei z.B. eine Transponderschaltung, ein Sensor, oder ein Energiespeicher wie eine Batterie oder ein Akkumulator sein.

Damit ist der Vorteil verbunden, dass die in die Aufnahmekammer AK eingeschobenen elektrischen Funktionselemente EB in allen radialen Raumrichtungen nahezu gleichmäßig vom Material des Aufnahmeblocks AB und vom Material des diesen umschließenden Isolierkörpers UI,OI umgeben sind.

Das beispielhafte Gehäuse G gemäß FIG 1,2 weist darüber hinaus eine hitzebeständige Kapsel UM auf, welche das Gehäuse G für einen vorteilhaften mechanischen Schutz gemäß der Erfindung umschließt. Die Kapsel UM kann dabei z.B. aus einem schlagfesten, hitzebeständigen Kunststoff bestehen.

Erfindungsgemäß weist der Aufnahmeblock AB in FIG 1 ein Material mit einer temperaturabhängigen spezifischen Wärmekapazität auf, welches die elektrischen Funktionselemente EB gleichmäßig umgibt. Dies wird insbesondere an der Querschnittdarstellung von FIG 2 entlang der Schnittlinie II-II in FIG 1 deutlich. Das umgebende Material kann dabei z.B. ein Kunststoff, insbesondere hochpolymerer thermoelastischer Kunststoff der LDPE-Sorte sein. Ein derartiger Kunststoff weist i.Vgl. zu Metallen oder niedermolekularen Stoffen signifikant erhöhte Werte für die spezifische Wärmekapazität (J/Kg*K) in einem gewissen Temperaturbereich auf.

In FIG 3 ist zum besseren Verständnis ein beispielhafter Verlauf der spezifischen Wärmekapazität als Funktion der Temperatur für einen Kunststoff der LDPE-Sorte zu sehen. Dabei weist dieser im Temperaturbereich von ca. 90°C bis 110°C stark erhöhte Werte für die spezifische Wärmekapazität auf. Ursache dafür sind Phasenübergänge, insbesondere in diesem Temperaturbereich verteilt stattfindende Schmelzvorgänge, für die eine hohe Schmelzenergie aus dem Kunststoff bereitgestellt werden muss. Durch diese "verteilten" Schmelzvorgänge geht der beispielhafte Kunststoff nicht in einem punktuellen Schmelzpunkt in den flüssigen Aggregatzustand über. Statt dessen wird der gesamte Kunststoff mit zunehmender Temperatur weicher. Ab einer gewissen Temperatur ist auch der beispielhafte thermoplastische Kunststoff flüssig.

Damit ist zum einen der Vorteil verbunden, dass bei einem zyklischen Wechselspiel von Erhitzungs- und Abkühlphasen sich im Vergleich zur nur einlagigen, vollständigen Umhüllung mit Wärmedämmstoff eine geringere stationäre Temperatur im Bereich der elektrischen Funktionselemente EB durch den umgebenden Aufnahmeblock AB einstellt. Dies wird vorteilhaft durch den Aufnahmeblock AB mit dem temperaturabhängigen spezifische Wärmekapazität, insbesondere durch einen hochpolymeren thermoplastischen Kunststoff der LDPE-Sorte erreicht.

Der beispielhafte hochpolymere thermoplastische Kunststoff der LDPE-Sorte hat den weiteren Vorteil, dass dieser bei gutem Wärmeleitvermögen ein geringes spezifisches Gewicht und eine große Wärmekapazität aufweist. Dadurch reduziert sich vorteilhaft das Gesamtgewicht des hitzebeständigen Gehäuses G insbesondere bei geeigneter Kombination des äußeren Isolierkörpers UI,OI mit dem inneren Aufnahmeblock AB und dessen Materialeigenschaften. Während der Isolierkörper UI,OI naturgemäß das Eindringen von Wärme an die elektrischen Funktionselemente EB verzögert, wirkt in diesem Fall das eine große Wärmekapazität und eine gute Wärmeleitfähigkeit aufweisende Material des Aufnahmeblockes AB wie eine Wärmesenke.

Durch die Auswahl des Kunststoffes einer beispielhaften LDPE-Sorte kann weiterhin vorteilhaft erreicht werden, dass bei Hitzeeinwirkung auf das Gehäuse G, wie z.B. in Lackiereinrichtungen, die maximale zulässige Arbeitstemperatur von ca. 120°C für elektrischen Funktionselemente EB wie Halbleiterbauelemente oder Energiespeicher erst sehr spät erreicht wird.

Dadurch ist es z.B. auch vorteilhaft möglich, die elektrischen Funktionselemente EB in ein Behältnis mit dem beispielhaften flüssigen Kunststoff einzutauchen, wobei das Behältnis in etwa der äußeren Form der Aufnahmekammer AK entsprechen sollte. Nach Abkühlung sind die elektrischen Funktionselemente dann komplett mit dem erfindungsgemäßen Kunststoff für einen guten Wärmeübergang fest umschlossen. Der auf diese Weise entstandene Aufnahmeblock AB kann dann vorteilhaft in die dafür vorgesehene Aufnahmekammer AK in einfacher Weise eingeschoben werden.

Weiterhin kann gemäß der Erfindung das Verhältnis von Oberfläche zum jeweiligen umschlossenen Volumen des zylinderförmigen Isolierkörpers UI,OI sowie des Aufnahmeblocks AB möglichst gering sein. FIG 1,2 zeigt dies vorteilhaft an dem beispielhaften Gehäuse G, bei welchem die Höhe und der Durchmesser gleich sind. Dadurch kann die wärmewirksame Oberfläche z.B. bei gegebenen Volumen verringert werden und dadurch die Verweildauer in der Erhitzungsphase weiter erhöht werden.

Weiterhin ist das in FIG 1,2 dargestellte Gehäuse G für die elektrischen Funktionselemente EB vorteilhaft zweiteilig ausgeführt. Dabei ist der Isolierkörper UI,OI in ein Oberteil OI und ein Unterteil UI getrennt. Beim Aufeinanderlegen beider Teile greifen bevorzugt zwei komplementäre Verzahnungsringe, welche im Längsschnitt I-I der FIG 2 dargestellt sind, ineinander. Hierdurch ist eine unterbrechungsfreie Isolierwirkung des zweiteiligen Isolierkörpers UI,OI gewährleistet. Bei der zweiteiligen Ausführung des Isolierkörpers UI,OI gemäß FIG 1,2 sind sowohl das Ober- als auch das Unterteil OI,UI von einer Halbschalenkapsel umgeben. Die Halbschalen können wiederum im Verzahnungsbereich an den Außenseiten der ineinandergreifenden Verzahnungsringe so miteinander verbunden werden, dass das hitzebeständige Gehäuse G hermetisch verbunden ist.

In FIG 4 ist schließlich eine beispielhafte Verwendung des hitzebeständigen Gehäuses G als mobiler Datenspeicher, welcher eine mit Bauelementen BE bestückte Leiterplatte LP als ein Beispiel für elektrische Funktionselemente EB und einen daran anschließbaren Antennenring AR aufweist. Dabei zeigt FIG 4 beispielhaft eine Leiterplatte LP, welche exemplarisch dargestellte Funktionselemente EB der mobilen Datenspeichervorrichtung trägt. Es handelt sich dabei um Speicherelemente und um Schaltungsteile, womit bevorzugt auf berührungslosem, induktivem Wege neue Daten von außen empfangen und in die Speicherelemente eingetragen, bzw. bei Bedarf der Inhalt der Speicherelemente abgesendet werden kann. Derartige Schaltungsteile werden auch als Transponder bezeichnet.

Dabei ist ein Antennenring AR über Leitungen L an den Kontakten K der Leiterplatte LP angeschlossen. Über den Antennenring AR können insbesondere die auf der Leiterplatte LP befindlichen Speicherelemente auf berührungslosem, induktivem Wege Daten mit externen Schreib- und Lesegeräten austauschen. Der Antennenring AR kann vorteilhaft unmittelbar auf der Außenseite des Oberteiles OI oder des Unterteiles UI des Isolierkörpers gemäß FIG 1,2 aufgelegt werden. Bei gekapselter Ausführung liegt er genau in dem Raum zwischen der Innenseite des Kapselbodens und der Außenseite eines der beiden Teile OI, UI des Isolierkörpers.

## Patentansprüche

1. Mobiler Datenspeicher mit einem hitzebeständigen Gehäuse (G) für elektrische Funktionselemente (EB), wobei das Gehäuse (G) aufweist
a) einen Isolierkörper (UI, OI), welcher möglichst zentrisch im Inneren eine Aufnahmekammer (AK) aufweist,
b) eine Aufnahmekammer (AK), welche mit einem Abdeckblock (AD) verschließbar ist, und
c) einen Aufnahmeblock (AB), welcher in die Aufnahmekammer (AK) einbringbar ist und welcher die elektrischen Funktionselemente (EB) mit einem Material als Wärmesenke umgibt,
**dadurch gekennzeichnet**,
d) dass das Material einen über einen Temperatur bereich verteilten Schmelzpunkt aufweist, so daß es ab einer Temperatur von ca. 90°C in einem Temperaturbereich von bis zu mehreren 10°C von einer festen in eine flüssige Phase übergeht.

2. Mobiler Datenspeicher nach Anspruch 1, **dadurch gekennzeichnet, dass** das Material einen über den Temperaturbereich von ca. 90°C bis 110°C verteilten Schmelzpunkt aufweist.

3. Mobiler Datenspeicher nach Anspruch 1 oder 2, **dadurch gekennzeichnet, dass** das Material Kunststoff ist.

4. Mobiler Datenspeicher nach Anspruch 3, **dadurch gekennzeichnet, dass** der Kunststoff hochpolymerer thermoelastischer Kunststoff mit geringer Dichte, insbesondere eine LDPE-Sorte ist.

5. Mobiler Datenspeicher nach einem der vorangegangenen Ansprüche, **dadurch gekennzeichnet, dass** der Isolierkörper (UI, OI) und/oder der Aufnahmeblock (AB) eine zylindrische Form aufweist.

6. Mobiler Datenspeicher nach einem der vorangegangenen Ansprüche, **dadurch gekennzeichnet, dass** der Isolierkörper (UI,OI) von einer Kapsel (UM) hermetisch dicht umgeben ist.

7. Mobiler Datenspeicher nach Anspruch 6, **dadurch ge-kennzeichnet,** dass die Kapsel (UM) aus einem schlagfesten, hitzebeständigen Kunststoff besteht.

8. Mobiler Datenspeicher nach einem der vorangegangenen Ansprüche, **dadurch gekennzeichnet, dass** der Abdeckblock (AD) aus dem gleichen Material wie der Isolierkörper (UI) besteht.

## Claims

1. Mobile data memory with a heat-resistant housing (G) for electrical function elements (EB), with the housing (G) comprising
a) an insulating body (UI, OI) comprising a receiving chamber (AK) lying as centrally as possible inside it
b) a receiving chamber (AK), which can be sealed with a cover block (AD) and
c) a receiving block (AB) which can be introduced into the receiving chamber (AK) and encloses the electrical function elements with a material as a heat sink
**characterised in that**
d) the material has a melting point distributed over a temperature range so that from a temperature of approximately 90 °C it passes from a solid phase into a fluid phase in a temperature range of up to multiple tens of degrees Celsius.

2. Mobile data memory according to claim 1, **characterised in that** the material has a melting point distributed over the temperature range of approximately 90 °C to 110 °C.

3. Mobile data memory according to claim 1 or 2, **characterised in that** the material is plastic.

4. Mobile data memory according to claim 3, **characterised in that** the plastic is a high-polymer thermoelastic plastic having low density, in particular an LDPE plastic.

5. Mobile data memory according to one of the preceding claims, **characterised in that** the insulating body (UI, OI) and/or the receiving block (AB) comprises a cylindrical shape.

6. Mobile data memory according to one of the preceding claims, **characterised in that** the insulating body (UI, OI) is enclosed by a capsule (UM) hermetically sealing the insulating body.

7. Mobile data memory according to claim 6, **characterised in that** the capsule (UM) is made of a shock-resistant, heat-resistant plastic.

8. Mobile data memory according to one of the preceding claims, **characterised in that** the cover block (AD) is made of the same material as the insulating body (UI).

## Revendications

1. Mémoire de données mobile, ayant un boîtier résistant à la chaleur (G) pour des éléments fonctionnels électriques (EB), le boîtier comportant :
a) un corps isolant (UI, OI), comportant si possible à l'intérieur, en son centre un compartiment de logement (AK),
b) un compartiment de logement (AK), pouvant être fermé par un bloc de recouvrement (AD), et
c) un bloc de logement (AB), pouvant être introduit dans le compartiment de logement (AK) et entourant les éléments fonctionnels électriques (EB) d'un matériau en tant que dissipateur thermique,
**caractérisée en ce que**
d) le matériau a un point de fusion réparti sur une plage de températures, pour qu'à partir d'une température d'environ 90°C, dans une plage de températures de jusqu'à plusieurs 10°C, il passe d'une phase solide en une phase liquide.

2. Mémoire de données mobile suivant la revendication 1, **caractérisée en ce que** le matériau a un point de fusion réparti sur une plage de température d'environ 90°C à 110°C.

3. Mémoire de données mobile suivant la revendication 1 ou 2, **caractérisée en ce que** le matériau est de la matière plastique.

4. Mémoire de données mobile suivant la revendication 3, **caractérisée en ce que** la matière plastique est une matière plastique thermoélastique à haut-polymère, de faible masse volumique, notamment une sorte de LDPE.

5. Mémoire de données mobile suivant l'une quelconque des revendications précédentes, **caractérisée en ce que** le corps isolant (UI, UO) et/ou le bloc de logement (AB) présente une forme cylindrique.

6. Mémoire de données mobile suivant l'une quelconque des revendications précédentes, **caractérisée en ce que** le corps isolant (UI, OI) est entouré de façon étroitement hermétique par une capsule (UM).

7. Mémoire de données mobile suivant la revendication 6, **caractérisée en ce que** la capsule (UM) est en une matière plastique antichoc, résistant à la chaleur.

8. Mémoire de données mobile suivant l'une quelconque des revendications précédentes, **caractérisée en ce que** le bloc de recouvrement (AD) est en le même matériau que le corps isolant (UI) .
